# EUROPEAN PATENT APPLICATION

(11) **EP 4 625 855 A1**
(43) Date of publication of application: **01.10.2025**
(21) Application number: 22969550.7
(22) Date of filing: 27.12.2022
(51) Int. Cl.: H04L 1/00

(54) **DATA TRANSMISSION METHOD AND RELATED APPARATUS**

(71) Applicant: Huawei Technologies Co., Ltd., Shenzhen, Guangdong 518129 (CN)
(72) Inventor: XUE, Lei, Shenzhen, Guangdong 518129 (CN); LOU, Yannian, Shenzhen, Guangdong 518129 (CN); QIN, Yiping, Shenzhen, Guangdong 518129 (CN)
(74) Representative: Gill Jennings & Every LLP
(86) International application number: PCT/CN2022/142545
(87) International publication number: WO 2024/138394

(57) **Abstract**

A data transmission method and a related apparatus are provided, to resolve a problem of a throughput decrease on a wireless side in a case of a high bit error rate. The method includes: A first communication device obtains a first data packet, where the first data packet includes first header information (S401); and the first communication device processes the first header information to obtain second header information, where the second header information includes information obtained by encoding the first header information and a first check bit (S402), and the first check bit is generated based on the first header information.

## Description

### TECHNICAL FIELD

This application relates to the communication field, and in particular, to a data transmission method and a related apparatus.

### BACKGROUND

In an existing communication system, optical fiber communication and wireless communication coexist. An optical signal in an optical fiber and an electrical signal in wireless communication may be converted via a photoelectric conversion module. However, during signal transmission, different types of communication have different requirements on a bit error of a signal. For example, a bit error threshold on an optical fiber communication side is less than a bit error threshold on a wireless communication side. This causes a waste of performance on the wireless side, and also limits improvement of a capacity of the communication system.

### SUMMARY

This application provides a data transmission method and a related apparatus, to resolve a problem of a throughput decrease on a wireless side in a case of a high bit error rate.

According to a first aspect, a data transmission method is provided. The method may be applied to a first communication device, for example, may be performed by an access network device, or may be performed by a component (such as a chip or a chip system) configured in an access network device, or may be implemented by a logical module or software that can implement all or some functions of an access network device. This is not limited in this application.

For example, the method includes: obtaining a first data packet, where the first data packet includes first header information; and processing the first header information to obtain second header information, where the second header information includes information obtained by encoding the first header information and a first check bit, and the first check bit is generated based on the first header information.

The first header information is located in a packet header of the first data packet, and the first header information may also be referred to as header information of the first data packet.

The first check bit is used by a receive end (a second communication device in this application) to determine whether the first header information is successfully received. For example, the first check bit may be a cyclic redundancy check (cyclic redundancy check, CRC) code bit, a parity check code bit, a Hamming code bit, or the like.

For example, the second header information includes the first header information, the first check bit, and a first encoded bit. The first encoded bit is obtained by the first communication device by encoding the first header information and the first check bit in a first coding scheme, and is used by the receive end to perform error correction on the received first header information.

The first coding scheme may include any one of the following: Hamming code (Hamming code) coding, cyclic code encoding, low-density parity-check code encoding, or other linear block code encoding.

According to this method, the first communication device adds the first check bit and the first encoded bit to the first header information in the obtained first data packet. Because the first encoded bit may be used by the receive end to perform error correction on the received first header information, when receiving the second header information, the receive end performs error correction on the first header information based on the first encoded bit in the second header information, and uses the first check bit to check corrected first header information. If the check succeeds, the header information is successfully received, so that the first data can be transmitted to a wireless side. In this way, even in a high transmission capacity scenario, a probability of a header information check failure can be reduced, so that a problem of a throughput decrease on the wireless side is resolved.

With reference to the first aspect, in some implementations of the first aspect, obtaining the first data packet includes: encapsulating first data according to a first protocol to obtain the first data packet, where the first data packet further includes the first data.

The first protocol in this application includes an enhanced common public radio interface protocol and a common public interface protocol, or another evolved fronthaul interface protocol.

It should be understood that during downlink transmission, the first data in this application may be data obtained by the first communication device by encoding information such as user data and/or control signaling from a core network. During uplink transmission, the first data in this application may be air interface data received by the first communication device from a terminal side. The air interface data is data that is obtained by the terminal side by encoding information such as user data and/or control signaling and that is transmitted to the first communication device through an air interface. It should be noted that the encoding herein is wireless-side encoding.

With reference to the first aspect, in some implementations of the first aspect, the method further includes: encapsulating a second data packet according to a second protocol to obtain a third data packet, where the third data packet includes third header information and the second data packet, the second data packet includes the second header information and the first data, and the third header information includes address information; and sending the third data packet.

The second protocol in this application includes an Ethernet protocol.

It should be understood that the third header information is located in a packet header of the third data packet, and the second data packet is located in a data part (which may also be referred to as a data field) of the third data packet.

The address information in this application may include a source address and a destination address.

With reference to the first aspect, in some implementations of the first aspect, obtaining the first data packet includes: encapsulating first data according to the first protocol to obtain a second data packet, where the second data packet includes third header information and the first data; and encapsulating the second data packet according to the second protocol to obtain the first data packet, where the first data packet further includes the second data packet, and the first header information includes address information.

It should be understood that the third header information is located in a packet header of the second data packet, and the first data is located in a data part of the second data packet. The second data packet is located in a data part of the first data packet. The third header information may also be referred to as header information of the second data packet.

With reference to the first aspect, in some implementations of the first aspect, the method further includes: sending a third data packet, where the third data packet includes the second header information and the second data packet.

It should be understood that the second header information is located in a packet header of the third data packet, and the second data packet is located in a data part of the third data packet. The second header information may also be referred to as header information of the third data packet.

With reference to the first aspect, in some implementations of the first aspect, obtaining the first data packet includes: encapsulating first data according to the first protocol to obtain a fourth data packet, where the fourth data packet includes fourth header information and the first data; processing the fourth header information to obtain third header information, where the third header information includes information obtained by encoding the fourth header information and a second check bit, and the second check bit is generated based on the fourth header information, and encapsulating a second data packet according to the second protocol to obtain the first data packet, where the first data packet further includes the second data packet, and the second data packet includes the third header information and the first data.

It should be understood that the fourth header information is located in a packet header of the fourth data packet, and the first data is located in a data part of the fourth data packet. The third header information is located in a packet header of the second data packet, and the first data is located in a data part of the second data packet. The second data packet is located in a packet header of the first data packet. The fourth header information may also be referred to as header information of the fourth data packet. The third header information may also be referred to as header information of the second data packet.

The second check bit is used by the receive end (the second communication device in this application) to determine whether the first header information is successfully received. For example, the second check bit may be a CRC bit, a parity check code bit, a Hamming code bit, or the like.

For example, the third header information includes the fourth header information, the second check bit, and a second encoded bit. The second encoded bit is obtained by the first communication device by encoding the fourth header information and the second check bit in a second coding scheme, and is used by the receive end to perform error correction on the received fourth header information.

The second coding scheme may include any one of the following: Hamming code encoding, cyclic code encoding, low-density parity-check code encoding, or other linear block code encoding. However, it should be understood that the first coding scheme and the second coding scheme may be the same or may be different.

With reference to the first aspect, in some implementations of the first aspect, the method further includes: sending a third data packet, where the third data packet includes the second header information and the second data packet.

It should be understood that the second header information is located in a packet header of the third data packet, and the second data packet is located in a data part of a datagram of the third data packet. The second header information may also be referred to as header information of the third data packet.

With reference to the first aspect, in some implementations of the first aspect, the method further includes: encoding the third data packet to obtain an encoded third data packet; and sending the third data packet includes: sending the encoded third data packet.

For example, that the first communication device encodes the third data packet include: The first communication device encodes the third data packet in a third coding scheme. The third coding scheme may be the same as or different from the first coding scheme or the second coding scheme.

With reference to the first aspect, in some implementations of the first aspect, the first check bit includes at least one of the following: a cyclic redundancy check code bit, a parity check code bit, or a Hamming code bit.

With reference to the first aspect, in some implementations of the first aspect, a type of the first check bit is the same as or different from a type of the second check bit.

With reference to the first aspect, in some implementations of the first aspect, the first protocol includes an enhanced common public radio interface protocol and a common public interface protocol, and the second protocol includes an Ethernet protocol.

With reference to the first aspect, in some implementations of the first aspect, a bit error threshold of the first data is different from a bit error threshold of the first header information.

It should be understood that the bit error rate threshold of the first data may be greater than the bit error rate threshold of the first header information. For example, the bit error rate threshold of the first data may be 1e-5 (or represented as 1x10⁻⁵), and the bit error rate threshold of the first header information may be 1e-12 (or represented as 1x10⁻¹²).

Based on this, in this application, only a check bit and an encoded bit are added to header information, so that transmission reliability of the header information can be improved, and the receive end can successfully receive the header information.

With reference to the first aspect, in some implementations of the first aspect, the second header information includes the first header information, the first check bit, and a first encoded bit, and the first encoded bit is generated based on the first header information and the first check bit in a first coding scheme.

With reference to the first aspect, in some implementations of the first aspect, the first coding scheme includes any one of the following: Hamming code encoding, cyclic code encoding, or low-density parity-check code encoding.

According to a second aspect, a data transmission method is provided. The method may be applied to a second communication device, for example, may be performed by an access network device, or may be performed by a component (such as a chip or a chip system) configured in an access network device, or may be implemented by a logical module or software that can implement all or some functions of an access network device. This is not limited in this application.

For example, the method includes: receiving a third data packet, where the third data packet includes second header information and a second data packet, the second header information includes information obtained by encoding first header information and a first check bit, and the first check bit is generated based on the first header information; decoding and checking the first header information; and obtaining the second data packet when the first header information is successfully checked.

For example, the second communication device decodes the second header information to obtain the first header information and the first check bit.

For example, that the second communication device checks the first header information includes: The second communication device checks the obtained first header information and first check bit based on an algorithm that is the same as that used by a first communication device side to calculate the first check bit, and if the check succeeds, the second communication device successfully receives the first header information.

According to this method, a first communication device adds the first check bit and a first encoded bit to the first header information in an obtained first data packet. Because the first encoded bit may be used by a receive end to perform error correction on the received first header information, when receiving the second header information, the receive end performs error correction on the first header information based on the first encoded bit in the second header information, and uses the first check bit to check corrected first header information. If the check succeeds, the header information is successfully received, so that first data can be transmitted to a wireless side. In this way, even in a high transmission capacity scenario, a probability of a header information check failure can be reduced, so that a problem of a throughput decrease on the wireless side is resolved.

With reference to the second aspect, in some implementations of the second aspect, the first data packet in which the first header information is located is obtained by encapsulating the second data packet according to a second protocol.

With reference to the second aspect, in some implementations of the second aspect, the second data packet includes third header information and first data, the third header information includes information obtained by encoding fourth header information and a second check bit, and the second check bit is generated based on the fourth header information.

With reference to the second aspect, in some implementations of the second aspect, the method further includes: decoding and checking the fourth header information; and sending the first data to the wireless side when the fourth header information is successfully checked.

For example, the second communication device checks the fourth header information and the second check bit based on an algorithm that is the same as that used by the first communication device side to calculate the second check bit, and if the check succeeds, the second communication device successfully receives the fourth header information.

With reference to the second aspect, in some implementations of the second aspect, a fourth data packet in which the fourth header information is located is obtained by encapsulating the first data according to a first protocol.

With reference to the second aspect, in some implementations of the second aspect, the second data packet includes third header information and the first data, and the second data packet is obtained by encapsulating the first data according to a first protocol.

With reference to the second aspect, in some implementations of the second aspect, the method further includes: sending the first data to the wireless side.

It should be understood that, during downlink transmission, the second communication device sends the first data to a terminal; and during uplink transmission, the second communication device sends the first data to a core network.

With reference to the second aspect, in some implementations of the second aspect, a type of the first check bit is the same as or different from a type of the second check bit.

With reference to the second aspect, in some implementations of the second aspect, the first check bit includes at least one of the following: a cyclic redundancy check code bit, a parity check code bit, or a Hamming code bit.

With reference to the second aspect, in some implementations of the second aspect, receiving the third data packet includes: receiving an encoded third data packet; and the method further includes: decoding the encoded third data packet to obtain the third data packet.

With reference to the second aspect, in some implementations of the second aspect, the first protocol includes an enhanced common public radio interface protocol and a common public interface protocol, and the second protocol includes an Ethernet protocol.

It should be noted that for descriptions of the first data packet, the second data packet, the third data packet, and the fourth data packet in any possible implementation of the second aspect, refer to the related descriptions in the first aspect. Details are not described herein again.

According to a third aspect, a data transmission method is provided. The method includes: A first communication device obtains a first data packet, where the first data packet includes first header information and a second data packet; the first communication device processes the first header information to obtain second header information, where the second header information includes information obtained by encoding the first header information and a first check bit, and the first check bit is generated based on the first header information; the first communication device sends a third data packet to a second communication device, where the third data packet includes the second header information; the second communication device decodes and checks the second data packet; and the second communication device obtains the second data packet when the second data packet is successfully checked.

According to this method, the first communication device adds the first check bit and a first encoded bit to the first header information in the obtained first data packet. Because the first encoded bit may be used by a receive end to perform error correction on the received first header information, when receiving the second header information, the receive end performs error correction on the first header information based on the first encoded bit in the second header information, to enable corrected first header information to pass first check bit-based check, and may transmit first data to a wireless side when the check succeeds. In this way, even in a high transmission capacity scenario, a probability of a header information check failure can be reduced, so that a problem of a throughput decrease on the wireless side is resolved.

According to a fourth aspect, a communication apparatus is provided, and is configured to perform the method according to any possible implementation of any one of the foregoing aspects. Specifically, the apparatus includes a module configured to perform the method according to any possible implementation of any one of the foregoing aspects.

In a design, the communication apparatus may include modules that perform and that are in one-to-one correspondence with the method/operations/steps/actions described in any one of the foregoing aspects. The module may be a hardware circuit, or may be software, or may be implemented by a hardware circuit in combination with software.

In another design, the communication apparatus is a communication chip. The communication chip may include an input circuit or interface configured to send information or data, and an output circuit or interface configured to receive information or data.

In another design, the communication apparatus is a first communication device, and the first communication device may include a transmitter configured to send information or data and a receiver configured to receive information or data.

In another design, the communication apparatus is a second communication device, and the second communication device may include a transmitter configured to send information or data and a receiver configured to receive information or data.

According to a fifth aspect, another communication apparatus is provided, including a processor, configured to execute a computer program and/or use a logic circuit, to enable the communication apparatus to perform the method according to any possible implementation of any one of the foregoing aspects.

Optionally, the communication apparatus further includes a memory, configured to store the computer program and/or a configuration file of the logic circuit.

It should be understood that there may be one or more processors, and there may be one or more memories.

Optionally, the communication apparatus further includes a communication interface, configured to input and/or output a signal.

According to a sixth aspect, a communication system is provided, including a communication apparatus configured to implement the method according to any one of the first aspect or the possible implementations of the first aspect, or including a communication apparatus configured to implement the method according to any one of the second aspect or the possible implementations of the second aspect.

In a possible design, the communication system may further include a device that interacts with the first communication device and/or the second communication device in the solutions provided in embodiments of this application.

According to a seventh aspect, a computer program product is provided, where the computer program product includes a computer program (which may also be referred to as code or instructions), and when the computer program is run, a computer is enabled to perform the method according to any possible implementation of any one of the foregoing aspects.

According to an eighth aspect, a computer-readable storage medium is provided, where the computer-readable storage medium stores a computer program (which may also be referred to as code or instructions), and when the computer program is run on a computer, the computer is enabled to perform the method according to any possible implementation of any one of the foregoing aspects.

### BRIEF DESCRIPTION OF DRAWINGS

FIG. 1 is a diagram of a communication scenario applicable to an embodiment of this application;
FIG. 2 is a diagram of a structure of an access network device;
FIG. 3 is a diagram of a frame structure of a data packet;
FIG. 4 is a schematic flowchart of a data transmission method according to an embodiment of this application;
FIG. 5 is a diagram of fields included in a first data packet according to an embodiment of this application;
FIG. 6 is a diagram of fields included in another first data packet according to an embodiment of this application;
FIG. 7 is a diagram of fields included in still another first data packet according to an embodiment of this application;
FIG. 8 is a schematic flowchart of another data transmission method according to an embodiment of this application;
FIG. 9 is a diagram of fields included in a data packet 2 according to an embodiment of this application;
FIG. 10 is a diagram of fields included in a data packet 4 according to an embodiment of this application;
FIG. 11 is a schematic flowchart of still another data transmission method according to an embodiment of this application;
FIG. 12 is a diagram of fields included in a data packet 3 according to an embodiment of this application;
FIG. 13 is a schematic flowchart of yet still another data transmission method according to an embodiment of this application,
FIG. 14 is a diagram of fields included in another data packet 3 according to an embodiment of this application,
FIG. 15 is a block diagram of a communication apparatus according to an embodiment of this application, and
FIG. 16 is a block diagram of another communication apparatus according to an embodiment of this application.

### DESCRIPTION OF EMBODIMENTS

The following describes technical solutions of this application with reference to accompanying drawings.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, and a universal mobile telecommunications system (universal mobile telecommunications system, UMTS), a 5th generation (5th generation, 5G) mobile communication system like a new radio (new radio, NR) system, and a next generation mobile communication system evolved from the 5G communication system.

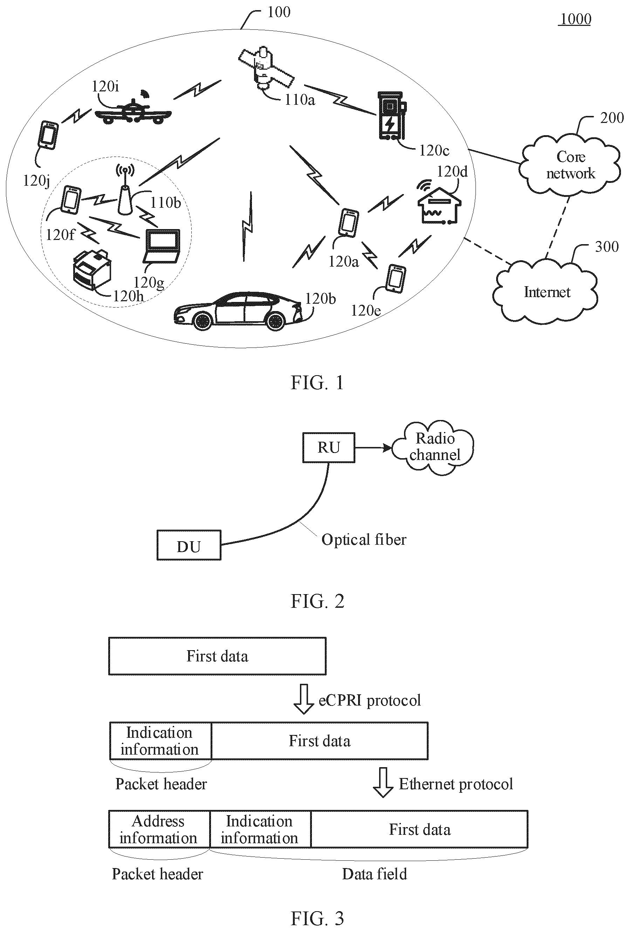

For ease of understanding of embodiments of this application, a communication system applicable to embodiments of this application is first described in detail with reference to FIG. 1.

FIG. 1 is a diagram of a communication system applicable to a method according to an embodiment of this application. As shown in FIG. 1, the communication system 1000 includes a radio access network (radio access network, RAN) 100 and a core network (core network, CN) 200. Optionally, the communication system 10 may further include an internet 300. The RAN 100 includes at least one RAN node (for example, 110a and 110b in FIG. 1, collectively referred to as 110) and at least one terminal (for example, 120a to 120j in FIG. 1, collectively referred to as 120). The terminal is connected to a radio access network device in a wireless manner, and the radio access network device is connected to the core network in a wireless or wired manner. The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a core network logical function and a radio access network logical function.

It should be understood that FIG. 1 is merely an example. The communication system 1000 may further include another network device, for example, may further include a wireless relay device and a wireless backhaul device.

The terminal is a device having a wireless transceiver function, and may also be referred to as user equipment (user equipment, UE), a mobile station (mobile station, MS), a mobile terminal (mobile terminal, MT), an access terminal, a subscriber unit, a subscriber station, a mobile station, a mobile console, or a remote station, a remote terminal, a mobile device, a user terminal, a terminal, a wireless communication device, a user agent, a user apparatus, or the like.

The terminal is a device that provides a user with voice and/or data connectivity, for example, a handheld device or a vehicle-mounted device having a wireless connection function. Currently, some examples of the terminal are a mobile phone (mobile phone), a tablet computer, a notebook computer, a palmtop computer, a mobile internet device (mobile internet device, MID), a wearable device, a VR device, an augmented reality (augmented reality, AR) device, a wireless terminal in industrial control (industrial control), a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a sensor terminal, a sensing terminal, an integrated sensing and communication device, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, an unmanned aerial vehicle, a wearable device, a terminal in a 5G network, or a terminal in a future evolved public land mobile communication network (public land mobile network, PLMN). A specific technology, a device form, and a name used by the terminal are not limited in embodiments of this application.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). The RAN 100 may alternatively be an open access network (open RAN, O-RAN, or ORAN) or a cloud radio access network (cloud radio access network, CRAN), or the RAN 100 may be a communication system integrating two or more of the foregoing systems.

The RAN node 110 may also be sometimes referred to as an access network device, a RAN entity, an access node, or the like, and forms a part of the communication system, to help the terminal implement radio access. A plurality of RAN nodes 110 in the communication system 1000 may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. The RAN node 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a sixth generation (6th generation, 6G) mobile communication system, a base station in a future mobile communication system, or the like. The RAN node may be a macro base station (for example, 110a in FIG. 1), a micro base station or an indoor station (for example, 110b in FIG. 1), a relay node or a donor node, or a radio controller in a centralized radio access network (centralized RAN, CRAN) scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of RAN nodes coordinate to assist the terminal in implementing radio access, and different RAN nodes respectively implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of the software module and the hardware module.

In some embodiments, one access network device may include one or more CUs, one or more DUs, and one or more RUs. The CU is configured to be connected to a core network and one or more DUs, and one DU may be connected to one or more RUs. Functions of the DU and the RU may be configured in a plurality of manners according to a design. For example, the DU is configured to implement a baseband function, and the RU is configured to implement an intermediate radio frequency function. For another example, the DU is configured to implement a higher-layer function at a physical (physical, PHY) layer, and the RU is configured to implement a lower-layer function at the PHY layer or implement the lower-layer function and a radio frequency function. The higher-layer functions at the physical layer may include some functions at the physical layer, and the some functions are closer to a media access control (media access control, MAC) layer. The lower-layer functions at the physical layer may include some other functions at the physical layer, and the some functions are closer to an intermediate radio frequency side.

In the foregoing example, there is an interface between the DU and the RU, and the interface may be referred to as a fronthaul interface. According to the functions of the DU and the RU and/or different division manners, the interface between the DU and the RU may support one or more types, for example, may be a common public radio interface (common public radio interface, CPRI), an enhanced common public radio interface (enhanced common public radio interface, eCPRI), or another evolved interface.

For example, if the fronthaul interface between the DU and the RU is the CPRI, the DU is configured to implement one or more of baseband functions, and the RU is configured to implement one or more of radio frequency functions. If the fronthaul interface between the DU and the RU is the eCPRI, relative to the CPRI, some downlink and/or uplink baseband functions are moved from the DU to the RU for implementation. Different division manners between the DU and the RU correspond to different types (category, Cat for short) of eCPRIs. It may be understood that there may be another division manner between the DU and the RU, that is, there may be another type of eCPRI.

In a possible design, the DU may be located in the BBU, and the RU may be located in the RRU/AAU/RRH. In this scenario, an interface between the BBU and the RRU/AAU/RRH may also be referred to as a fronthaul interface. To implement the fronthaul interface, the BBU and the RRU/AAU/RRH may be connected through a fronthaul network, or the DU and the RU may be connected through a fronthaul network. The fronthaul network includes but is not limited to a fiber direct connection and a wavelength division multiplexing network. A processing unit configured to implement a baseband function in the BBU is referred to as a base band high (base band high, BBH) unit, and a processing unit configured to implement a baseband function in the RRU/AAU/RRH is referred to as a base band low (base band low, BBL) unit.

The following describes a structure of the access network device with reference to FIG. 2 by using an example in which the access network device includes the DU and the RU.

FIG. 2 is a diagram of an architecture of an access network device. As shown in FIG. 2, a DU and an RU are connected through an optical fiber, and the RU is connected to a radio channel. It should be understood that the architecture of the access network device shown in FIG. 2 is merely an example, and should not constitute any limitation on this application.

The following uses downlink transmission as an example to describe a processing process of downlink data with reference to the architecture shown in FIG. 2. For example, when the access network device obtains the downlink data, the DU of the access network device first performs wireless-side encoding on the downlink data to obtain first data, and then encapsulates the first data according to a CPRI (or eCPRI) protocol and an Ethernet protocol sequentially to obtain a to-be-transmitted data packet; then generates a check bit based on the to-be-transmitted data packet, and performs optical-side encoding on the to-be-transmitted data packet to which the check bit is added, to obtain an encoded data packet; and finally performs photoelectric conversion on the encoded data packet to obtain an optical signal, and sends the optical signal to the RU through the optical fiber. After receiving the optical signal, the RU sequentially performs photoelectric conversion, decoding, and check; and after the check succeeds, the RU transmits the first data in the to-be-transmitted data packet to a wireless side, and the wireless side performs wireless-side decoding to obtain the downlink data.

With reference to the architecture shown in FIG. 2, an example in which the eCPRI protocol is used between the DU and the RU is used. FIG. 3 is a diagram of a frame structure of a packet generated when a DU transmits first data to an RU according to an eCPRI protocol. As shown in FIG. 3, an example in which the DU sends the first data to the RU is used. The DU generates a first packet according to the eCPRI protocol. A data part of the first packet includes the first data, and a packet header of the first packet includes indication information. The indication information may include control data and other service data. The DU further generates a second packet based on the first packet according to an Ethernet protocol. The first packet is located in a data part of the second packet, a packet header of the second packet includes address information, and the address information is a source address and a destination address. It may be understood that the first data may be user data information, service information, or the like, and may be placed in a payload (payload) part of a frame. The DU sends the second packet to the RU.

It should be understood that the packet header may also be referred to as a header, header information, or another name. This is not limited in this application.

With reference to FIG. 2, it can be learned that an access network device and a terminal in a communication system include optical fiber communication and wireless communication during data transmission. To meet a requirement of a user for a network access bandwidth, a bandwidth of a radio access network is upgraded from an existing specification of 64 transmission receiver units (transmission receiver units, TR) 100 megabytes (MBytes, M) to a specification of 128TR 400 M. As a bandwidth of the wireless side increases, impact of fiber dispersion becomes greater. As a result, a bit error rate of a signal transmitted through the optical fiber is excessively high. After an optical side performs error correction, a signal quality requirement still cannot be met. Consequently, data cannot be transmitted to the wireless side, resulting in a throughput decrease on the wireless side.

Currently, the optical side and the wireless side have decoupled requirements on a bit error rate of a signal. To be specific, the optical side ensures that a signal provided to the wireless side is bit-error-free, and decoding on the wireless side only ensures performance of the wireless side. The two sides are not jointly optimized, resulting in performance waste. For example, a bit error rate threshold of the optical side is 1e-12 (or represented as 1x10⁻¹²), and a bit error rate threshold of the wireless side is only 1e-5 (or represented as 1x10⁻⁵).

In some implementations, to implement high-speed transmission, a modem component with a larger bandwidth may be used, and digital signal processing is used to compensate for a transmission impairment, to reduce a bit error rate. However, in this method, an independent chip is needed, and energy consumption and costs are high.

In some other embodiments, to implement high-speed transmission, a bit error rate on the optical side may be reduced. With reference to the example shown in FIG. 2, it can be learned that the first data is framed and encapsulated according to the eCPRI protocol and the Ethernet protocol. In addition to the first data, the obtained data packet further includes header information, and the information has a high requirement on transmission reliability. After the bit error rate on the optical side is reduced, the header information may be unsuccessfully checked, and the entire data packet is discarded. As a result, the first data cannot be transmitted to the wireless side, and a throughput on the wireless side decreases.

Therefore, in this application, it is expected that a problem of a throughput decrease on the wireless side can be resolved in a case in which a transmission rate is directly increased without increasing deployment costs.

In view of this, embodiments of this application provide a data transmission method and a related apparatus. A transmit end adds a check bit and an encoded bit to header information of an obtained data packet, to ensure that the header information can be transmitted in an approximately lossless manner, and does not add a check bit to a data part of the to-be-transmitted data packet. In this way, when receiving the to-be-transmitted data packet, a receive end may use the encoded bit to perform error correction on the received header information, then check corrected header information but does not check the to-be-transmitted data part. After the header information is successfully checked, the receive end may directly transmit the data part to a wireless side, and the wireless side performs error correction. In this way, even in a high transmission capacity scenario, a probability of a header information check failure can be reduced, so that a problem of a throughput decrease on the wireless side is resolved.

To clearly describe the technical solutions in embodiments of this application, the following descriptions are first provided.

First, in the following embodiments, terms and English abbreviations such as header information, CRC, and eCPRI are all examples provided for ease of description, and should not constitute any limitation on this application. This application does not exclude a possibility of defining another term that can implement a same or similar function in an existing or a future protocol.

Second, the terms "first", "second", and various numeric numbers in the following embodiments are merely used for distinguishing for ease of description, and are not intended to limit the scope of embodiments of this application, for example, distinguishing different data packets, and distinguishing different header information.

Third, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may represent a, or b, or c, or a and b, or a and c, or b and c, or a, b, and c, where a, b, and c may be single, or may be plural.

Fourth, the term such as "example" or "for example" represents an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

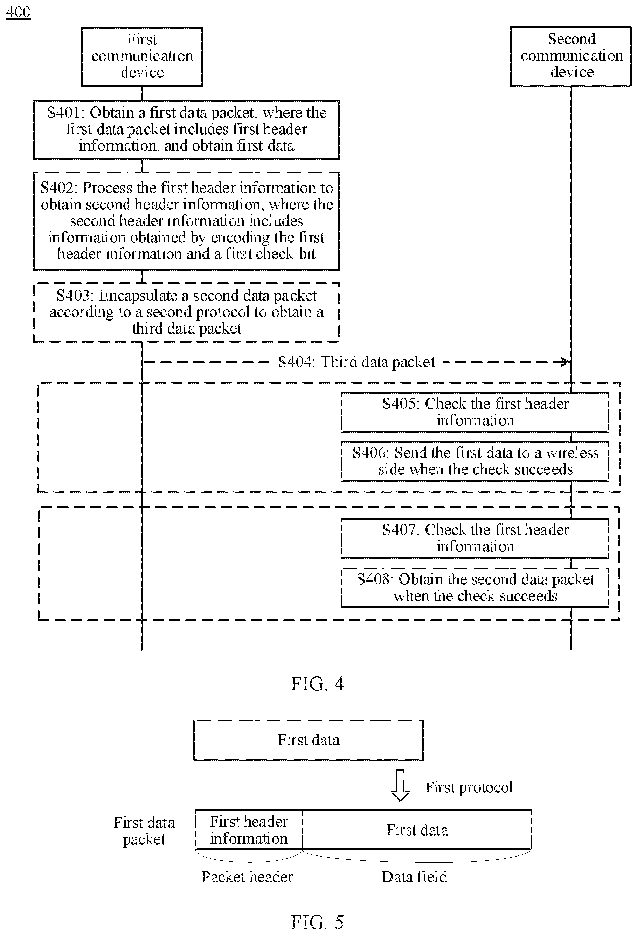

With reference to FIG. 4 to FIG. 10, the following describes in detail a data transmission method provided in an embodiment of this application. The method may be applied to the communication system 100 shown in FIG. 1 and the access network device shown in FIG. 2. However, this embodiment of this application is not limited thereto.

In a flowchart shown in FIG. 4, the method is described from a perspective of a communication device. The communication device may be the DU shown in FIG. 2, or the RU shown in FIG. 2. For example, a first communication device may be the DU, and a second communication device may be the RU; or a first communication device is the RU, and a second communication device is the DU. It should be understood that, although an embodiment shown in FIG. 4 is described by using the communication device as an example, an execution entity of the method should not be limited thereto. The method provided in embodiments of this application can be performed provided that a program that records code of the method provided in embodiments of this application can be run. For example, the communication device may alternatively be replaced with a component (for example, a chip or a chip system) configured in a terminal device or a network device, or another functional module that can invoke a program and execute the program.

FIG. 4 is a diagram of a data transmission method 400 according to an embodiment of this application. As shown in FIG. 4, the method 400 may include S401 and S402. The following describes the steps shown in FIG. 4 in detail.

S401: A first communication device obtains a first data packet, where the first data packet includes first header information.

For example, the first communication device may obtain the first data packet in the following three implementations.

Manner 1: The first communication device encapsulates first data according to a first protocol to obtain the first data packet, where the first data packet further includes the first data.

For example, the first protocol includes an enhanced common public radio interface protocol and a common public interface protocol, or another evolved fronthaul interface protocol.

For example, the first header information includes indication information. The indication information may include real-time control (real-time control) data, other service data, and the like, and is used for annotating and describing the first data, for example, indicating a length of the first data, a version of the first protocol, or a message type.

It should be understood that during downlink transmission, the first data may be data obtained by the first communication device by encoding information such as user data and/or control signaling from a core network. During uplink transmission, the first data may be air interface data received by the first communication device from a terminal side. The air interface data is data that is obtained by the terminal side by encoding information such as user data and/or control signaling and that is transmitted to the first communication device through an air interface. It should be noted that the encoding herein is wireless-side encoding.

A processing process in Manner 1 may be shown in FIG. 5. The first communication device encapsulates the first data according to the first protocol to obtain the first data packet. A data field in the first data packet is the first data, and a packet header is the first header information.

Manner 2: That the first communication device obtains the first data packet may include the following two steps I and II.
(I) The first communication device encapsulates first data according to a first protocol, to obtain a second data packet, where the second data packet includes third header information and the first data.

For example, the third header information includes indication information. For descriptions of the indication information, refer to the related descriptions in Manner 1.

For descriptions of the first data and the first protocol, refer to the related descriptions in Manner 1. Details are not described herein again.

(II) The first communication device encapsulates the second data packet according to a second protocol to obtain the first data packet, where the first data packet further includes the second data packet.

For example, the second protocol includes an Ethernet protocol.

For example, the first header information includes address information, and the address information may include a source address and a destination address.

It should be understood that a data field in the first data packet includes the second data packet, and a packet header includes the first header information.

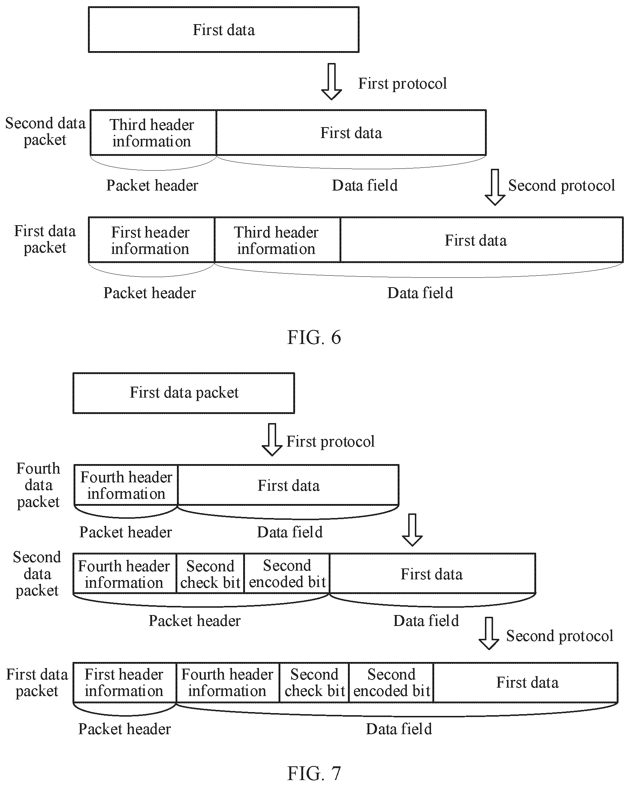

A processing process in Manner 2 may be shown in FIG. 6. The first communication device encapsulates the first data according to the first protocol to obtain the second data packet. A data field in the second data packet is the first data, and a packet header is the third header information. The first communication device encapsulates the second data packet according to the second protocol to obtain the first data packet. The data field in the first data packet is the second data packet, and the packet header is the first header information.

Manner 3: That the first communication device obtains the first data packet may include the following three steps I to III.
(I) The first communication device encapsulates first data according to a first protocol to obtain a fourth data packet, where the fourth data packet includes fourth header information and the first data.

For descriptions of the first protocol and the first data, refer to the related descriptions in Manner 1. Details are not described herein again.

For example, the fourth header information includes indication information. For descriptions of the indication information, refer to the descriptions in Manner 1.

(II) The first communication device processes the fourth header information to obtain third header information, where the third header information includes information obtained by encoding the fourth header information and a second check bit, and the second check bit is generated based on the fourth header information.

It should be understood that the second check bit is obtained by the first communication device by using an algorithm to perform calculation on the fourth header information, and is used by a receive end (a second communication device in this application) to determine whether the third header information is successfully received.

For example, the second check bit may include at least one of the following: a cyclic redundancy check (cyclic redundancy check, CRC) bit, a parity check code bit, or a Hamming code bit.

For example, that the first communication device processes the fourth header information includes: The first communication device generates the second check bit based on the fourth header information, and appends the second check bit to the fourth header information, and the first communication device encodes the fourth header information and the second check bit in a second coding scheme, to obtain a second encoded bit, and appends the second encoded bit to the second check bit, to obtain the third header information. In other words, the third header information includes the fourth header information, the second check bit, and the second encoded bit. The second encoded bit is used by the receive end to perform error correction on the received fourth header information.

For example, the second coding scheme may include any one of the following: Hamming code encoding, cyclic code encoding (Bose-Chaudhuri-Hocquenghem codes, BCH), low-density parity-check code (low-density parity-check code, LDPC) coding, or other linear block code encoding.

(III) The first communication device encapsulates a second data packet according to a second protocol to obtain the first data packet. The first data packet further includes the second data packet, and the second data packet includes the third header information and the first data.

For example, the first header information includes address information. For descriptions of the address information, refer to the related descriptions in Manner 2.

For descriptions of the second protocol, refer to the related descriptions in Manner 2. Details are not described herein again.

It should be understood that a data field in the first data packet includes the second data packet, and a packet header includes the first header information.

A processing process in Manner 3 may be shown in FIG. 7. The first communication device encapsulates the first data according to the first protocol to obtain the fourth data packet. A data field in the fourth data packet is the first data, and a packet header is the fourth header information. The first communication device generates a check bit for the fourth header information in the fourth data packet to obtain the second check bit, encodes the fourth header information and the second check bit in the second coding scheme to obtain the second encoded bit, places the fourth header information, the second check bit, and the second encoded bit in a packet header of the second data packet, and places the first data in a data part of the second data packet, to obtain the second data packet. The first communication device encapsulates the second data packet according to the second protocol to obtain the first data packet. The data field in the first data packet is the second data packet, and the packet header is the first header information.

S402: The first communication device processes the first header information to obtain second header information, where the second header information includes information obtained by encoding the first header information and a first check bit.

The first check bit is generated based on the first header information. For example, the first check bit is obtained by the first communication device by using an algorithm to perform calculation on the fourth header information, and is used by the receive end (the second communication device in this application) to determine whether the first header information is successfully received.

The first check bit may include at least one of the following: a cyclic redundancy check code bit, a parity check code bit, or a Hamming code bit. However, it should be understood that a type of the first check bit may be the same as or different from a type of the second check bit.

For example, that the first communication device processes the first header information includes: The first communication device generates the first check bit based on the first header information, and appends the first check bit to the first header information, and the first communication device encodes the first header information and the first check bit in a first coding scheme, to obtain a first encoded bit, and appends the first encoded bit to the first check bit, to obtain the second header information. In other words, the second header information includes the first header information, the first check bit, and the first encoded bit. The first encoded bit is used by the receive end to perform error correction on the received second header information.

For example, the first coding scheme may include any one of the following: Hamming code encoding, cyclic code encoding, low-density parity-check code encoding, or other linear block code encoding. However, it should be understood that the first coding scheme and the second coding scheme may be the same or may be different.

In this embodiment of this application, the first communication device adds the first check bit and the first encoded bit to the first header information in the obtained first data packet. Because the first encoded bit may be used by the receive end to perform error correction on the received first header information, when receiving the second header information, the receive end may perform error correction on the first header information based on the first encoded bit in the second header information, to enable corrected first header information to pass first check bit-based check, and may transmit the first data to a wireless side when the check succeeds. In this way, even in a high transmission capacity scenario, a probability of a header information check failure can be reduced, so that a problem of a throughput decrease on the wireless side is resolved.

In an optional embodiment, the method 400 further includes: S403: The first communication device encapsulates the second data packet according to the second protocol to obtain a third data packet.

The third data packet includes third header information and the second data packet, and the second data packet includes the second header information and the first data.

For example, the third header information includes address information. For descriptions of the address information, refer to Manner 2 in S401.

For descriptions of the second protocol, refer to Manner 2 in S401. For descriptions of the second header information, refer to S402. Details are not described herein again.

It should be noted that whether the first communication device performs S403 may be determined based on a manner in which the first communication device obtains the first data packet. For example, if the first communication device obtains the first data packet by using the method shown in Manner 1, the first communication device continues to perform S403 after performing S402. If the first communication device obtains the first data packet by using the method shown in Manner 2 or Manner 3, the first communication device may not perform S403 after performing S402.

In an optional embodiment, the method 400 further includes: S404. The first communication device sends the third data packet. Correspondingly, the second communication device receives the third data packet.

Optionally, the first communication device obtains the first data packet in Manner 1, and continues to perform S403 after performing S402, to obtain the third data packet including the third header information and the second data packet. For descriptions of the third header information and the second data packet, refer to the related descriptions in Manner 1 in S401.

Optionally, the first communication device obtains the first data packet in Manner 2 or Manner 3, and may obtain the third data packet including the second header information and the second data packet by performing S402. For descriptions of the second header information and the second data packet, refer to the related descriptions in Manner 2 or Manner 3 in S401. Details are not described herein again.

In this embodiment of this application, when a transmission capacity of a fronthaul link remains unchanged, the first communication device may add redundancy to a header of the third data packet by compressing a data field in the third data packet, to place the second check bit and the second encoded bit. Alternatively, a transmission capacity of a fronthaul link is increased, for example, transmission rates of a serializer-deserializer (serializer-deserializer, SerDes) (where SerDes is a high-speed electrical interface) and an optical module in the first communication device are improved, to add redundancy to a header of the third data packet, so as to place the second check bit and the second encoded bit.

In an optional embodiment, the method 400 further includes: S405: The second communication device checks the first header information; and S406: When the check succeeds, the second communication device sends the first data to the wireless side.

Optionally, before S405, the method 400 further includes: The second communication device decapsulates the third data packet to obtain the third header information and the second data packet, where the second data packet includes the second header information and the first data, and the second header information includes the first header information, the first check bit, and the first encoded bit; the second communication device decodes the second data packet to obtain a decoded second data packet; and the second communication device decapsulates the decoded second data packet to obtain the first header information, the first check bit, and the first data. It should be understood that header information of the decoded second data packet does not include the first encoded bit.

In this embodiment of this application, during downlink transmission, the second communication device sends the first data to a terminal; and during uplink transmission, the second communication device sends the first data to a core network.

In an optional embodiment, the method 400 further includes: S407: The second communication device checks the first header information; and S408: When the check succeeds, obtain the second data packet.

Optionally, before S407, the method 400 further includes: The second communication device decodes the third data packet to obtain a decoded third data packet; and the second communication device decapsulates the decoded third data packet to obtain the first header information, the first check bit, and the second data packet. It should be understood that header information of the decoded third data packet does not include the first bit.

In this embodiment of this application, that the second communication device checks the first header information includes: The second communication device checks the obtained first header information and first check bit based on an algorithm that is the same as that used by the first communication device side to calculate the first check bit, and if the check succeeds, the second communication device successfully receives the first header information.

It should be noted that the second communication device may perform only S405 and S406, or may perform only S407 and S408. A specific group of steps to be performed by the second communication device may be determined based on header information and data information that are included in the received third data packet. For example, if the third data packet received in S404 includes the third header information and the second data packet, S405 and S406 continue to be performed after S404; or if the third data packet received in S404 includes the second header information and the second data packet, S407 and S408 continue to be performed after S404.

In an optional embodiment, the second data packet includes the third header information and the first data, and the second data packet is obtained by the first communication device by encapsulating the first data according to the first protocol. The method 400 further includes: The second communication device decapsulates the second data packet to obtain the third header information and the first data; and the second communication device sends the first data to the wireless side.

For descriptions of the first data, the first protocol, and the third header information, refer to the related descriptions in Manner 2 in S401. Details are not described herein again.

In an optional embodiment, the second data packet includes the third header information and the first data, and the third header information includes information obtained by the first communication device by encoding the fourth header information and the second check bit. The method 400 further includes: The second communication device checks the fourth header information, and when the check succeeds, sends the first data to the wireless side.

Optionally, before the second communication device checks the fourth header information, the method 400 further includes: The second communication device decodes the second data packet to obtain a decoded second data packet; and the second communication device decapsulates the decoded second data packet to obtain the fourth header information, the second check bit, and the first data.

It should be understood that the decoded second data packet does not include the second encoded bit.

For descriptions of the first data, the third header information, and the fourth header information, refer to the related descriptions in Manner 3 in S401. Details are not described herein again.

In this embodiment of this application, that the second communication device checks the fourth header information includes: The second communication device checks the obtained fourth header information and second check bit based on an algorithm that is the same as that used by the first communication device side to calculate the second check bit, and if the check succeeds, the second communication device successfully receives the fourth header information.

In an optional embodiment, the method 400 further includes: The first communication device encodes the third data packet to obtain an encoded third data packet; and that the first communication device sends the third data packet includes: The first communication device sends the encoded third data packet. Correspondingly, that the second communication device receives the third data packet includes: The first communication device receives the encoded third data packet, and decodes the encoded third data packet to obtain the third data packet.

For example, that the first communication device encodes the third data packet include: The first communication device encodes the third data packet in a third coding scheme. The third coding scheme may be the same as or different from the first coding scheme or the second coding scheme. Alternatively, because a bit error rate threshold of the first data is low, some coding schemes with simple algorithms may be used as the third coding scheme for encoding.

In an optional embodiment, the bit error threshold of the first data is different from a bit error threshold of the first header information.

For example, the bit error rate threshold of the first data may be 1e-5 (or represented as 1x10⁻⁵), and the bit error rate threshold of the first header information may be 1e-12 (or represented as 1x10⁻¹²).

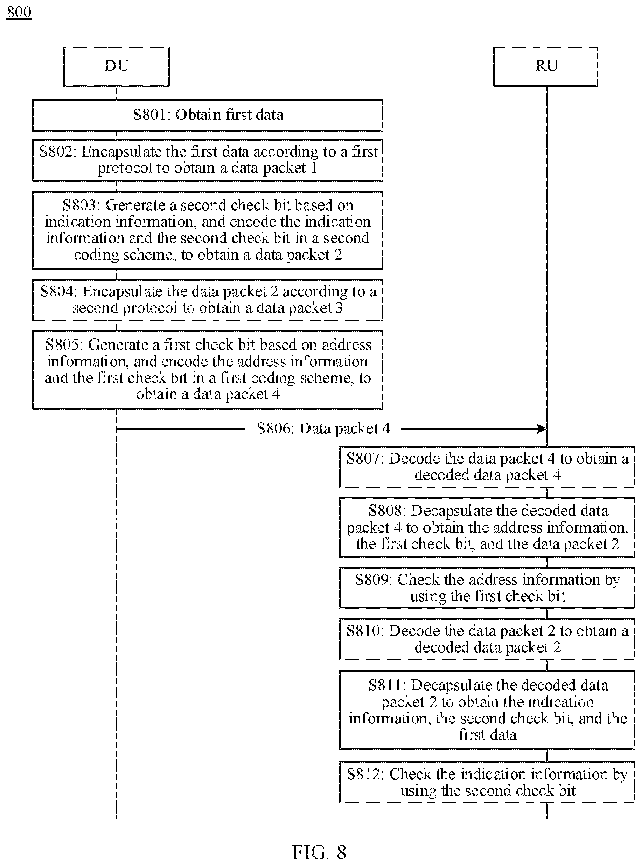

The following describes, based on the embodiment shown in FIG. 4, a data transmission method provided in this application with reference to FIG. 8 to FIG. 14 by using downlink transmission as an example. Content described in the embodiment shown in FIG. 4 is not described again. In data transmission methods shown in FIG. 8 to FIG. 14, an example in which a DU is used as a first communication device and an RU is used as a second communication device is used for description.

The following describes in detail a data transmission method provided in an embodiment of this application with reference to FIG. 8 by using an example in which the first communication device obtains the first data packet in Manner 3. In an embodiment shown in FIG. 8, a data packet 1 is the fourth data packet in Manner 3, a data packet 2 is the second data packet in Manner 3, a data packet 3 is the first data packet in Manner 3, and a data packet 4 is the third data packet in Manner 3. In the embodiment shown in FIG. 8, header information 1 is the fourth header information in Manner 3, header information 2 is the third header information in Manner 3, header information 3 is the first header information in Manner 3, and header information 4 is the second header information in Manner 3.

FIG. 8 is a schematic flowchart of another data transmission method 800 according to an embodiment of this application. As shown in FIG. 8, the method 800 may include the following steps.

S801: A DU obtains first data.

The first data in this embodiment of this application may be data obtained by the DU by encoding information such as user data and/or control signaling from a core network.

S802: The DU encapsulates the first data according to a first protocol to obtain the data packet 1.

For descriptions of the first protocol, refer to the descriptions of the first protocol in S401.

The data packet 1 may include the first data and the header information 1, and the header information 1 includes indication information.

For descriptions of the indication information, refer to the descriptions of the indication information in S401.

S803: The DU generates a second check bit based on the indication information, and encodes the indication information and the second check bit in a second coding scheme, to obtain the data packet 2.

It should be understood that the second check bit is obtained by the DU by using an algorithm to calculate the indication information, and the second check bit is used by a receive end to determine whether the indication information is successfully received.

The data packet 2 may include the first data and the header information 2. The header information 2 includes the indication information, the second check bit, and a second encoded bit. The second encoded bit is obtained by the DU by encoding the indication information and the second check bit, and is used by the receive end to perform error correction on the received indication information.

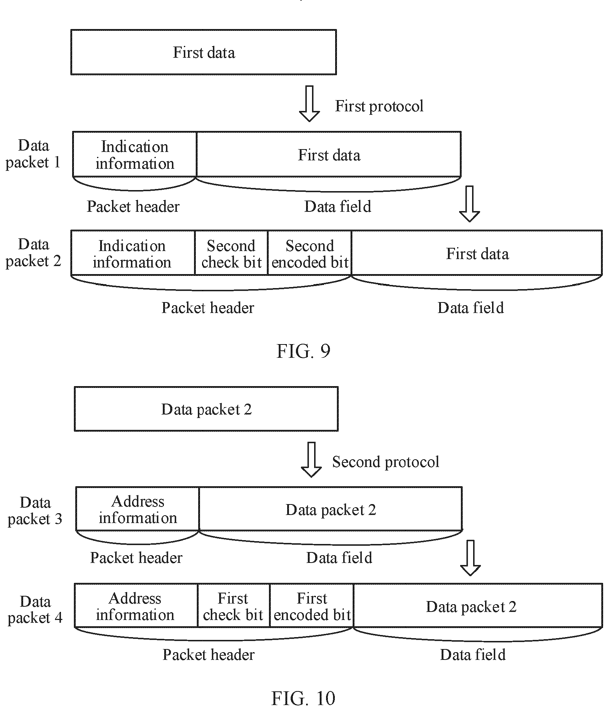

A processing process of S802 and S803 may be shown in FIG. 9. The DU encapsulates the first data according to the first protocol to obtain the data packet 1. A data field in the data packet 1 is the first data, and a packet header is the indication information. The DU generates a check bit for the indication information in the first data packet to obtain the second check bit, encodes the indication information and the second check bit in the second coding scheme to obtain the second encoded bit, places the indication information, the second check bit, and the second encoded bit in a packet header of the data packet 2, and places the first data in a data part of the data packet 2, to finally obtain the data packet 2.

S804: The DU encapsulates the data packet 2 according to a second protocol to obtain the data packet 3.

For descriptions of the second protocol, refer to the related descriptions in S401.

The data packet 3 may include the data packet 2 and the header information 3. The data packet 2 is located in a data part of the data packet 3, and the header information 3 is header information of the data packet 3. The header information 3 includes address information. For example, the address information may include a source address and a destination address.

S805: The DU generates a first check bit based on the address information, and encodes the address information and the first check bit in a first coding scheme, to obtain the data packet 4.

It should be understood that the first check bit is obtained by the DU by using an algorithm to calculate the address information, and the first check bit is used by the receive end to determine whether the address information is successfully received.

The data packet 4 may include the data packet 2 and the header information 4. The header information 4 includes the address information, the first check bit, and a first encoded bit. The first encoded bit is obtained by the DU by encoding the address information and the first check bit, and is used by the receive end to perform error correction on the received address information.

For descriptions of the first coding scheme, refer to the descriptions in S401. Details are not described herein again.

A processing process of S804 and S805 may be shown in FIG. 10. The DU encapsulates the data packet 2 according to the second protocol to obtain the data packet 3. A data field in the data packet 3 is the data packet 2, and a packet header is the address information. The DU generates a check bit for the address information in the data packet 3 to obtain the first check bit, encodes the address information and the first check bit in the first coding scheme to obtain the first encoded bit, places the address information, the first check bit, and the first encoded bit in a packet header of the data packet 4, and places the data packet 2 in a data part of the data packet 4, to finally obtain the data packet 4. For fields included in the data packet 2, refer to FIG. 9. Details are not described herein again.

Optionally, when a transmission capacity of a fronthaul link remains unchanged, the DU may add redundancy to a header of the data packet 3 by compressing a data field of the data packet 3, to place the first check bit and the first encoded bit. Alternatively, a transmission capacity of a fronthaul link is increased, for example, transmission rates of a SerDes and an optical module in the DU are improved, to add redundancy to the header of the data packet 3, so as to place the first check bit and the first encoded bit.

S806: The DU sends the data packet 4 to an RU.

Correspondingly, the RU receives the data packet 4.

In a specific implementation, the optical module in the DU converts an electrical signal that carries the data packet 4 into an optical signal, and transmits the optical signal to the RU through an optical fiber.

Similarly, correspondingly, an optical module of the RU receives the optical signal, and performs an inverse operation of the foregoing specific implementation, to obtain the data packet 4.

Then, the following S807 to S812 continue to be performed.

In a possible implementation, the method 800 further includes: The DU encodes the data packet 4 in the second coding scheme, to obtain an encoded data packet 4. That the DU sends the data packet 4 to the RU includes: The DU sends the encoded data packet 4 to the RU. Correspondingly, the RU receives the encoded data packet 4, and decodes the encoded data packet 4 to obtain the data packet 4.

The second coding scheme may be the same as or different from the second coding scheme or the first coding scheme. Alternatively, because a bit error rate threshold of the first data is low, some coding schemes with simple algorithms may be used as the second coding scheme for encoding.

S807: The RU decodes the data packet 4 to obtain a decoded data packet 4.

For descriptions of the data packet 4, refer to S805. Details are not described herein again.

S808: The RU decapsulates the decoded data packet 4 to obtain the address information, the first check bit, and the data packet 2.

S809: The RU checks the address information by using the first check bit.

If the check succeeds, S810 to S812 continue to be performed. If the check fails, the RU discards the data packet 4.

For example, the RU checks the received address information and first check bit based on an algorithm that is the same as that used by the DU side to calculate the first check bit, and if the check succeeds, the RU successfully receives the address information.

S810: The RU decodes the data packet 2 to obtain a decoded data packet 2.

For descriptions of the data packet 2, refer to S803. Details are not described herein again.

S811: The RU decapsulates the decoded data packet 2 to obtain the indication information, the second check bit, and the first data.

S812: The RU checks the indication information by using the second check bit.

If the check succeeds, the RU transmits the first data to a wireless side, and the wireless side decodes and checks the first data. If the check fails, the RU discards the data packet 4.

For example, the RU checks the received indication information and second check bit based on an algorithm that is the same as that used by the DU side to calculate the second check bit, and if the check succeeds, the RU successfully receives the indication information.

An optical side has a high requirement on transmission reliability of the address information and the indication information, and has a low requirement on transmission reliability of the first data. Therefore, in a high bit error rate scenario, if the DU sends, to the RU, a to-be-transmitted data packet to which a check bit and an encoded bit are added, and the RU decodes (which may also be referred to as error correction in this application) and checks the entire data packet, there may be a case in which the first data is successfully checked, but the indication information or the address information is unsuccessfully checked. As a result, the RU discards the entire data packet. Based on the method provided in this embodiment of this application, the DU no longer adds the check bit to the entire data packet, but adds the check bit and the encoded bit to only the address information and the indication information whose transmission reliability meets high requirements, to improve the transmission reliability of the two pieces of information. In this way, when receiving the data packet, the RU decodes and checks only the address information and the indication information, and after the address information and the indication information are successfully checked, the RU may directly and transparently transmit the first data to the wireless side, and the wireless side decodes and checks the obtained first data with a high bit error rate. In the method provided in this application, a probability that the address information and the indication information are successfully checked is higher than a probability that the entire packet is successfully checked. Therefore, the method provided in this embodiment of this application can effectively resolve a problem of a throughput decrease on the wireless side in the high bit error rate scenario.

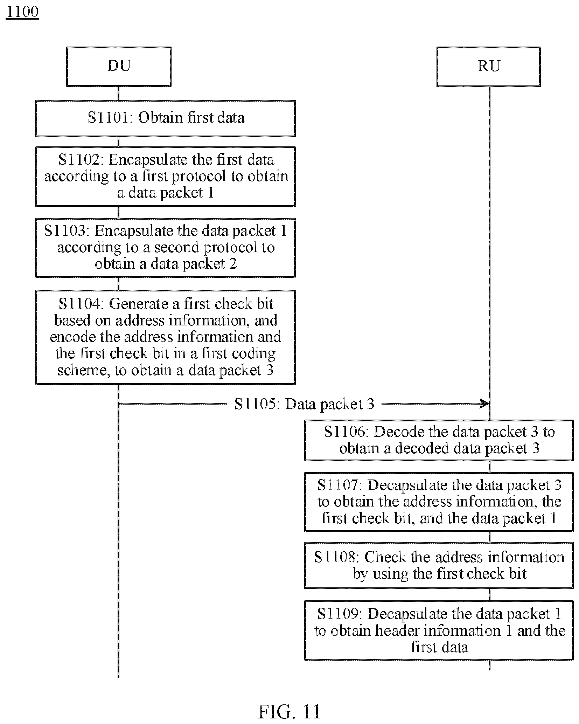

The following describes in detail a data transmission method provided in an embodiment of this application with reference to FIG. 11 by using an example in which the first communication device obtains the first data packet in Manner 2. In an embodiment shown in FIG. 11, a data packet 1 is the second data packet in Manner 2, a data packet 2 is the first data packet in Manner 2, and a data packet 3 is the third data packet in Manner 2. In the embodiment shown in FIG. 11, header information 1 is the third header information in Manner 2, header information 2 is the first header information in Manner 2, and header information 3 is the second header information in Manner 2.

FIG. 11 is a schematic flowchart of still another data transmission method 1100 according to an embodiment of this application. As shown in FIG. 11, the method 1100 may include the following steps.

S1101: A DU obtains first data.

For descriptions of the first data, refer to the descriptions in S801.

S1102: The DU encapsulates the first data according to a first protocol to obtain the data packet 1.

For descriptions of the first protocol and the first data packet, refer to the descriptions in S802.

S1103: The DU encapsulates the data packet 1 according to a second protocol to obtain the data packet 2.

For descriptions of the second protocol, refer to the descriptions in S802.

The data packet 2 may include the data packet 1 and the header information 2, and the header information 2 includes address information.

S1104: The DU generates a first check bit based on the address information, and encodes the address information and the first check bit in a first coding scheme, to obtain the data packet 3.

The data packet 3 may include the data packet 1 and the header information 3, and the data packet 1 is located in a data part of the data packet 3. The header information 3 includes the address information, the first check bit, and a first encoded bit.

For descriptions of the first coding scheme, the first check bit, and the first encoded bit, refer to the descriptions in S805. Details are not described herein again.

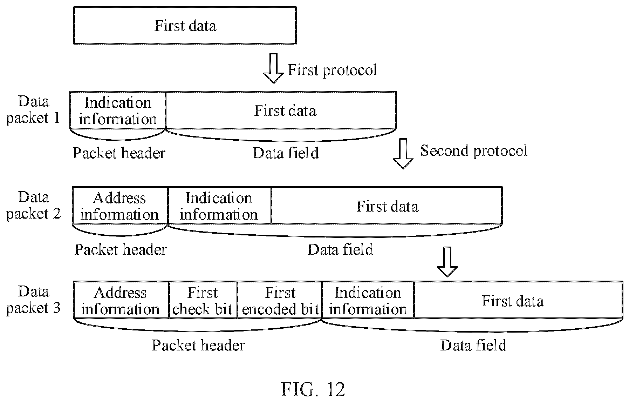

A processing process of S1102 to S1104 may be shown in FIG. 12. The DU encapsulates the first data according to the first protocol to obtain the data packet 1. A data field in the data packet 1 is the first data, and a packet header is indication information. The DU encapsulates the data packet 1 according to the second protocol to obtain the data packet 2. In the data packet 2, a data field is the data packet 1, and a packet header is the address information. The DU generates a check bit for the address information in the data packet 2 to obtain the first check bit, encodes the address information and the first check bit in the first coding scheme to obtain the first encoded bit, places the address information, the first check bit, and the first encoded bit in a packet header of the data 3, and places the data packet 1 in a data part of the data packet 3, to finally obtain the data packet 3.

S1105: The DU sends the data packet 3 to an RU.

Correspondingly, the RU receives the data packet 3.

In a specific implementation, an optical module in the DU converts an electrical signal that carries the data packet 3 into an optical signal, and transmits the optical signal to the RU through an optical fiber.

Similarly, correspondingly, an optical module of the RU receives the optical signal, and performs an inverse operation of the foregoing specific implementation, to obtain the data packet 3.

Then, the following S1106 to S1109 continue to be performed.

In a possible implementation, the method 1100 further includes: The RU encodes the data packet 3 in a third coding scheme, to obtain an encoded data packet 3. That the DU sends the data packet 3 to the RU includes: The DU sends the encoded data packet 3 to the RU. Correspondingly, the RU receives the encoded data packet 3, and decodes the encoded data packet 3 to obtain the data packet 3.

For descriptions of the third coding scheme, refer to the descriptions in S806. Details are not described herein again.

S1106: The RU decodes the data packet 3 to obtain a decoded data packet 3.

For descriptions of the data packet 3, refer to S 1104.

S1107: The RU decapsulates the data packet 3 to obtain the address information, the first check bit, and the data packet 1.

S1108: The RU checks the address information by using the first check bit.

If the check succeeds, S1109 continues to be performed. If the check fails, the RU discards the data packet 3.

For the check on the address information, refer to the descriptions in S809. Details are not described herein again.

S1109: The RU decapsulates the data packet 1 to obtain the header information 1 and the first data.

Then, the RU transparently transmits the first data to a wireless side, and the wireless side decodes and checks the first data.

In this embodiment of this application, bit error rate thresholds of the first data and the address information are the same. For example, the bit error rate threshold of the first data may be 1e-5, and the bit error rate threshold of the address information may be 1e-12.

An optical side has a high requirement on transmission reliability of the address information, and has a low requirement on transmission reliability of the first data. Therefore, in a high bit error rate scenario, if the DU sends, to the RU, a to-be-transmitted data packet to which a check bit and an encoded bit are added, and the RU decodes (which may also be referred to as error correction in this application) and checks the entire data packet, there may be a case in which the first data is successfully checked, but the address information is unsuccessfully checked. As a result, the RU discards the entire data packet. Based on the method provided in this embodiment of this application, the DU no longer adds the check bit to the entire data packet, but adds the check bit and the encoded bit to only the address information whose transmission reliability meets a high requirement, to improve the transmission reliability of the address information. In this way, when receiving the data packet, the RU decodes and checks only the address information, and after the address information is successfully checked, the RU may directly and transparently transmit the first data to the wireless side, and the wireless side decodes and checks the obtained first data with a high bit error rate. In the method provided in this application, a probability that the address information is successfully checked is higher than a probability that the entire packet is successfully checked. Therefore, the method provided in this embodiment of this application can effectively resolve a problem of a throughput decrease on the wireless side in the high bit error rate scenario.

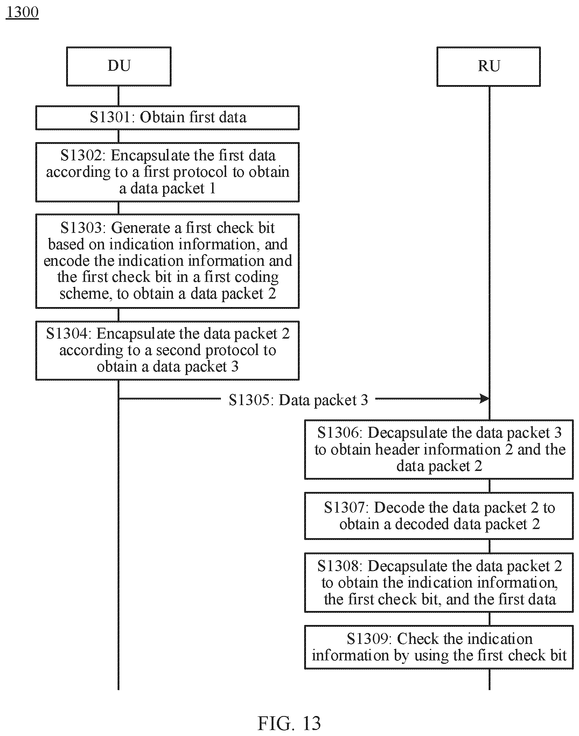

The following describes in detail a data transmission method provided in an embodiment of this application with reference to FIG. 13 by using an example in which the first communication device obtains the first data packet in Manner 1. In an embodiment shown in FIG. 13, a data packet 1 is the first data packet in Manner 1, a data packet 2 is the second data packet in Manner 1, and a data packet 3 is the third data packet in Manner 1. In the embodiment shown in FIG. 13, header information 1 is the first header information in Manner 1, header information 2 is the second header information in Manner 1, and header information 3 is the third header information in Manner 1.

FIG. 13 is a schematic flowchart of yet still another data transmission method 1300 according to an embodiment of this application. As shown in FIG. 13, the method 1300 may include the following steps.

S1301: A DU obtains first data.

For descriptions of the first data, refer to the descriptions in S801.

S1302: The DU encapsulates the first data according to a first protocol to obtain the data packet 1.

For descriptions of the first protocol and the data packet 1, refer to the descriptions in S802.

S1303: The DU generates a first check bit based on indication information, and encodes the indication information and the first check bit in a first coding scheme, to obtain the data packet 2.

For descriptions of the first coding scheme, the second check bit, and the data packet 2, refer to the descriptions in S803.

S1304: The DU encapsulates the data packet 2 according to a second protocol to obtain the data packet 3.

For descriptions of the second protocol and the data packet 3, refer to S804.

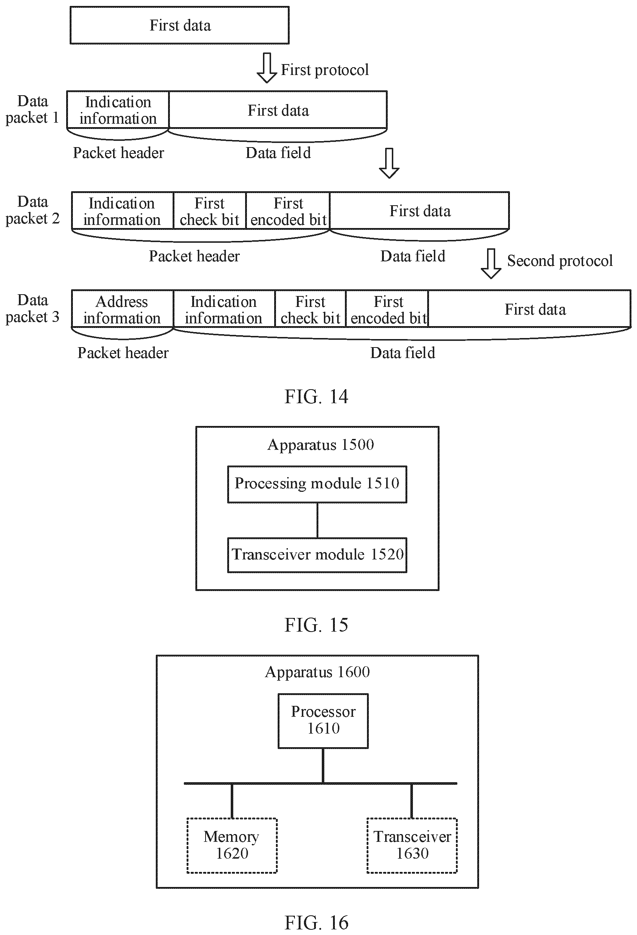

A processing process of S1302 to S1304 may be shown in FIG. 14. The DU encapsulates the first data according to the first protocol to obtain the data packet 1. A data field in the data packet 1 is the first data, and a packet header is the indication information. The DU generates a check bit for the indication information in the data packet 1 to obtain the first check bit, encodes the indication information and the first check bit in the first coding scheme to obtain a first encoded bit, places the indication information, the first check bit, and the first encoded bit in a packet header of the data 2, and places the first data in a data part of the data packet 2, to obtain the data packet 2. The DU encapsulates the data packet 2 according to the second protocol to obtain the data packet 3. A data field in the data packet 3 is the data packet 2, and a packet header is address information.

S1305: The DU sends the data packet 3 to an RU.

Correspondingly, the RU receives the data packet 3.

In a specific implementation, an optical module in the DU converts an electrical signal that carries the data packet 3 into an optical signal, and transmits the optical signal to the RU through an optical fiber.

Similarly, correspondingly, an optical module of the RU receives the optical signal, and performs an inverse operation of the foregoing specific implementation, to obtain the data packet 3.

Then, the following S1306 to S1309 continue to be performed.

In a possible implementation, the method 1300 further includes: The RU encodes the data packet 3 in a third coding scheme, to obtain an encoded data packet 3. That the DU sends the data packet 3 to the RU includes: The DU sends the encoded data packet 3 to the RU. Correspondingly, the RU receives the encoded data packet 3, and decodes the encoded data packet 3 to obtain the data packet 3.

For descriptions of the third coding scheme, refer to the descriptions in S806. Details are not described herein again.

S1306: The RU decapsulates the data packet 3 to obtain the header information 3 and the data packet 2.

For descriptions of the data packet 3, refer to S804. Details are not described herein again.

S1307: The RU decodes the data packet 2 to obtain a decoded data packet 2.

For descriptions of the data packet 2, refer to S803. Details are not described herein again.

S1308: The RU decapsulates the data packet 2 to obtain the indication information, the first check bit, and the first data.

S1309: The RU checks the indication information by using the first check bit.

If the check succeeds, the RU transparently transmits the first data to a wireless side, and the wireless side decodes and checks the first data.

If the check fails, the RU discards the data packet 3.

For the check on the indication information, refer to the descriptions in S812. Details are not described herein again.

An optical side has a high requirement on transmission reliability of the indication information, and has a low requirement on transmission reliability of the first data. Therefore, in a high bit error rate scenario, if the DU sends, to the RU, a to-be-transmitted data packet to which a check bit and an encoded bit are added, and the RU decodes (which may also be referred to as error correction in this application) and checks the entire data packet, there may be a case in which the first data is successfully checked, but the indication information is unsuccessfully checked. As a result, the RU discards the entire data packet. Based on the method provided in this embodiment of this application, the DU no longer adds the check bit to the entire data packet, but adds the check bit and the encoded bit to only the indication information whose transmission reliability meets a high requirement, to improve the transmission reliability of the indication information. In this way, when receiving the data packet, the RU decodes and checks only the indication information, and after the indication information is successfully checked, the RU may directly and transparently transmit the first data to the wireless side, and the wireless side decodes and checks the obtained first data with a high bit error rate. In the method provided in this application, a probability that the indication information is successfully checked is higher than a probability that the entire packet is successfully checked. Therefore, the method provided in this embodiment of this application can effectively resolve a problem of a throughput decrease on the wireless side in the high bit error rate scenario.

It should be understood that sequence numbers of the foregoing processes do not mean execution sequences. The execution sequence of the processes should be determined based on functions and internal logic of the processes, and should not be construed as any limitation on implementation processes of embodiments of this application.

The foregoing describes in detail the method in embodiments of this application with reference to FIG. 4 to FIG. 14. The following describes in detail an apparatus in embodiments of this application with reference to FIG. 15 and FIG. 16.

FIG. 15 shows a communication apparatus 1500 according to an embodiment of this application. As shown in FIG. 15, the communication apparatus 1500 may include a processing module 1510 and a transceiver module 1520.

In a possible implementation, the communication apparatus 1500 is the foregoing first communication device or a chip of the first communication device.

The processing module 1510 is configured to obtain a first data packet, where the first data packet includes first header information; and process the first header information to obtain second header information, where the second header information includes information obtained by encoding the first header information and a first check bit, and the first check bit is generated based on the first header information.

Optionally, the processing module 1510 is further configured to encapsulate first data according to a first protocol to obtain a first data packet, where the first data packet further includes the first data.

Optionally, the processing module 1510 is further configured to encapsulate a second data packet according to a second protocol to obtain a third data packet, where the third data packet includes third header information and the second data packet, the second data packet includes the second header information and the first data, and the third header information includes address information. The transceiver module 1520 is configured to send the third data packet.

Optionally, the processing module 1510 is further configured to encapsulate first data according to the first protocol to obtain a second data packet, where the second data packet includes third header information and the first data; and encapsulate the second data packet according to the second protocol to obtain the first data packet, where the first data packet further includes the second data packet, and the first header information includes address information.

Optionally, the processing module 1510 is further configured to encapsulate first data based on the first protocol to obtain a fourth data packet, where the fourth data packet includes fourth header information and the first data; process the fourth header information to obtain third header information, where the third header information includes information obtained by encoding the fourth header information and a second check bit, and the second check bit is generated based on the fourth header information; and encapsulate a second data packet according to the second protocol to obtain the first data packet, where the first data packet further includes the second data packet, and the second data packet includes the third header information and the first data.

Optionally, the transceiver module 1520 is further configured to send a third data packet, where the third data packet includes the second header information and the second data packet.

Optionally, the processing module 1510 is further configured to encode the third data packet to obtain an encoded third data packet. The transceiver module 1520 is further configured to send the encoded third data packet.

Optionally, the first check bit includes at least one of the following: a cyclic redundancy check code bit, a parity check code bit, or a Hamming code bit.

Optionally, a type of the first check bit is the same as or different from a type of the second check bit.

Optionally, the first protocol includes an enhanced common public radio interface protocol and a common public interface protocol, and the second protocol includes an Ethernet protocol.

Optionally, a bit error threshold of the first data is different from a bit error threshold of the first header information.

Optionally, the second header information includes the first header information, the first check bit, and a first encoded bit, and the first encoded bit is obtained by encoding the first header information and the first check bit in a first coding scheme.

Optionally, the first coding scheme includes any one of the following: Hamming code encoding, cyclic code encoding, or low-density parity-check code encoding.

In an optional example, a person skilled in the art may understand that the communication apparatus 1500 may be specifically the first communication device in the foregoing embodiments. The communication apparatus 1500 may be configured to perform procedures and/or steps corresponding to the first communication device in the method 400. To avoid repetition, details are not described herein again.

In a possible implementation, the communication apparatus 1500 is the foregoing second communication device or a chip of the second communication device.

The transceiver module 1520 is configured to receive a third data packet, where the third data packet includes second header information and a second data packet, the second header information includes information obtained by encoding first header information and a first check bit, and the first check bit is generated based on the first header information. The processing module 1510 is configured to decode and check the first header information, and obtain the second data packet when the first header information is successfully checked.

Optionally, a first data packet in which the first header information is located is obtained by encapsulating the second data packet according to a second protocol.

Optionally, the second data packet includes third header information and first data, the third header information includes information obtained by encoding fourth header information and a second check bit, and the second check bit is generated based on the fourth header information.

Optionally, the processing module 1510 is further configured to decode and check the fourth header information, and send the first data to the wireless side when the fourth header information is successfully checked.

Optionally, a fourth data packet in which the fourth header information is located is obtained by encapsulating the first data according to a first protocol.

Optionally, the second data packet includes third header information and the first data, and the second data packet is obtained by encapsulating the first data according to the first protocol.

Optionally, the transceiver module 1520 is further configured to send the first data to a wireless side.

Optionally, a type of the first check bit is the same as or different from a type of the second check bit.

Optionally, the first check bit includes at least one of the following: a cyclic redundancy check code bit, a parity check code bit, or a Hamming code bit.

Optionally, the transceiver module 1520 is further configured to receive an encoded third data packet. The processing module 1510 is further configured to decode the encoded third data packet to obtain the third data packet.

Optionally, the first protocol includes an enhanced common public radio interface protocol and a common public interface protocol, and the second protocol includes an Ethernet protocol.

In an optional example, a person skilled in the art may understand that the communication apparatus 1500 may be specifically the second communication device in the foregoing embodiments. The communication apparatus 1500 may be configured to perform procedures and/or steps corresponding to the second communication device in the method 400. To avoid repetition, details are not described herein again.

It should be understood that the communication apparatus 1500 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the communication apparatus 1500 may be specifically the first communication device or the second communication device in the foregoing embodiments, or functions of the first communication device or the second communication device in the foregoing embodiments may be integrated into the communication apparatus 1500, the communication apparatus 1500 may be configured to perform procedures and/or steps corresponding to the first communication device or the second communication device in the foregoing method embodiments. To avoid repetition, details are not described herein again.

The communication apparatus 1500 has a function of implementing corresponding steps performed by the first communication device or the second communication device in the foregoing method. The foregoing function may be implemented by hardware, or may be implemented by hardware by executing corresponding software. The hardware or the software includes one or more modules corresponding to the function. For example, the transceiver module 1520 may be a communication interface, for example, a transceiver interface.

FIG. 16 shows another communication apparatus 1600 according to an embodiment of this application. The communication apparatus 1600 includes a processor 1610. Optionally, the apparatus 1600 further includes a memory 1620 and a transceiver 1630. The processor 1610, the memory 1620, and the transceiver 1630 are connected through an internal connection path. The memory 1620 is configured to store instructions. The processor 1610 is configured to execute the instructions stored in the memory 1620, so that the communication apparatus 1600 can perform the communication method provided in the foregoing method embodiments.

It should be understood that functions of the communication apparatus 1600 in the foregoing embodiments may be integrated into the communication apparatus 1600, and the communication apparatus 1600 may be configured to perform the steps and/or procedures corresponding to the first communication device in the foregoing method embodiments, or the communication apparatus 1600 may be further configured to perform the steps and/or procedures corresponding to the second communication device in the foregoing method embodiments. Optionally, the memory 1620 may include a read-only memory and a random access memory, and provide the instructions and data for the processor. A part of the memory may further include a non-volatile random access memory. For example, the memory may further store information of a device type. The processor 1610 may be configured to execute the instructions stored in the memory. When the processor executes the instructions, the processor 1610 may perform the steps and/or procedures corresponding to the first communication device in the foregoing method embodiments, or the processor 1610 may perform the steps and/or procedures corresponding to the second communication device in the foregoing method embodiments.

It should be understood that, in this embodiment of this application, the processor 1610 may be a central processing unit (central processing unit, CPU) or a baseband processor, or the processor 1610 may be another generalpurpose processor, a digital signal processor (digital signal process, DSP), an ASIC, a field programmable gate array (field programmable gate array, FPGA), or another programmable logic device, a discrete gate or a transistor logic device, a discrete hardware component, or the like. The processor 1610 may be a microprocessor or the processor 1610 may be any conventional processor or the like.

In an implementation process, the steps in the foregoing method 400 may be completed by using an integrated logic circuit of hardware in the processor or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads instructions in the memory and completes the steps in the foregoing methods in combination with hardware of the processor. To avoid repetition, details are not described herein again.

This application further provides a computer-readable medium. The computer-readable medium stores a computer program, and when the computer program is executed by a computer, the method in any one of the foregoing method embodiments is implemented.

This application further provides a computer program product including instructions. When the computer program product is executed by a computer, the method in any one of the foregoing method embodiments is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A data transmission method, comprising:
obtaining a first data packet, wherein the first data packet comprises first header information; and
processing the first header information to obtain second header information, wherein the second header information comprises information obtained by encoding the first header information and a first check bit, and the first check bit is generated based on the first header information.

2. The method according to claim 1, wherein obtaining the first data packet comprises:
encapsulating first data according to a first protocol to obtain the first data packet, wherein the first data packet further comprises the first data.

3. The method according to claim 2, wherein the method further comprises:
encapsulating a second data packet according to a second protocol to obtain a third data packet, wherein the third data packet comprises third header information and the second data packet, the second data packet comprises the second header information and the first data, and the third header information comprises address information; and
sending the third data packet.

4. The method according to claim 1, wherein obtaining the first data packet comprises:
encapsulating first data according to a first protocol to obtain a second data packet, wherein the second data packet comprises third header information and the first data; and
encapsulating the second data packet according to a second protocol to obtain the first data packet, wherein the first data packet further comprises the second data packet, and the first header information comprises address information.

5. The method according to claim 4, wherein the method further comprises:
sending a third data packet, wherein the third data packet comprises the second header information and the second data packet.

6. The method according to claim 1, wherein obtaining the first data packet comprises:
encapsulating first data according to a first protocol to obtain a fourth data packet, wherein the fourth data packet comprises fourth header information and the first data;
processing the fourth header information to obtain third header information, wherein the third header information comprises information obtained by encoding the fourth header information and a second check bit, and the second check bit is generated based on the fourth header information; and
encapsulating a second data packet according to a second protocol to obtain the first data packet, wherein the first data packet further comprises the second data packet, and the second data packet comprises the third header information and the first data.

7. The method according to claim 6, wherein the method further comprises:
sending a third data packet, wherein the third data packet comprises the second header information and the second data packet.

8. The method according to claim 5 or 7, wherein the method further comprises:
encoding the third data packet to obtain an encoded third data packet; and
sending the third data packet comprises:
sending the encoded third data packet.

9. The method according to claim 6 or 7, wherein a type of the first check bit is the same as or different from a type of the second check bit.

10. The method according to any one of claims 3 to 8, wherein the first protocol comprises an enhanced common public radio interface protocol and a common public interface protocol, and the second protocol comprises an Ethernet protocol.

11. The method according to any one of claims 1 to 10, wherein the first check bit comprises at least one of the following: a cyclic redundancy check code bit, a parity check code bit, or a Hamming code bit.

12. The method according to any one of claims 2 to 11, wherein a bit error threshold of the first data is different from a bit error threshold of the first header information.

13. The method according to any one of claims 1 to 12, wherein the second header information comprises the first header information, the first check bit, and a first encoded bit, and the first encoded bit is obtained by encoding the first header information and the first check bit in a first coding scheme.

14. The method according to claim 13, wherein the first coding scheme comprises any one of the following: Hamming code encoding, cyclic code encoding, or low-density parity-check code encoding.

15. A data transmission method, comprising:
receiving a third data packet, wherein the third data packet comprises second header information and a second data packet, the second header information comprises information obtained by encoding first header information and a first check bit, and the first check bit is generated based on the first header information;
checking the first header information; and
obtaining the second data packet when the first header information is successfully checked.

16. The method according to claim 15, wherein a first data packet in which the first header information is located is obtained by encapsulating the second data packet according to a second protocol.

17. The method according to claim 16, wherein the second data packet comprises third header information and first data, the third header information comprises information obtained by encoding fourth header information and a second check bit, and the second check bit is generated based on the fourth header information.

18. The method according to claim 17, wherein the method further comprises:
checking the fourth header information; and
sending the first data to a wireless side when the fourth header information is successfully checked.

19. The method according to claim 17 or 18, wherein a fourth data packet in which the fourth header information is located is obtained by encapsulating the first data according to a first protocol.

20. The method according to claim 16, wherein the second data packet comprises third header information and the first data, and the second data packet is obtained by encapsulating the first data according to a first protocol.

21. The method according to claim 20, wherein the method further comprises:
sending the first data to a wireless side.

22. The method according to any one of claims 17 to 19, wherein a type of the first check bit is the same as or different from a type of the second check bit.

23. The method according to any one of claims 15 to 22, wherein the first check bit comprises at least one of the following: a cyclic redundancy check code bit, a parity check code bit, or a Hamming code bit.

24. The method according to any one of claims 15 to 23, wherein receiving the third data packet comprises:
receiving an encoded third data packet; and
the method further comprises:
decoding the encoded third data packet to obtain the third data packet.

25. The method according to claim 20, wherein the first protocol comprises an enhanced common public radio interface protocol and a common public interface protocol, and the second protocol comprises an Ethernet protocol.

26. A communication apparatus, comprising a module configured to implement the method according to any one of claims 1 to 25.

27. A communication apparatus, comprising a processor, configured to execute a computer program and/or use a logic circuit, to enable the communication apparatus to implement the method according to any one of claims 1 to 25.

28. The apparatus according to claim 27, wherein the apparatus further comprises a memory, configured to store the computer program and/or the logic circuit.

29. A computer-readable storage medium, wherein the computer-readable storage medium stores a computer program, and when the computer program is executed by a processor, the method according to any one of claims 1 to 25 is implemented.

30. A computer program product, comprising a computer program, wherein when the computer program is run, the method according to any one of claims 1 to 25 is implemented.

31. A communication system, comprising a first communication device and a second communication device, wherein the first communication device is configured to implement the method according to any one of claims 1 to 14, and the second communication device is configured to perform the method according to any one of claims 15 to 25.
